# EUROPÄISCHE PATENTSCHRIFT

(11) **EP 2 143 674 B1**
(45) Veröffentlichungstag und Bekanntmachung des Hinweises auf die Patenterteilung: **08.08.2012**
(21) Anmeldenummer: 09007631.6
(22) Anmeldetag: 09.06.2009
(51) Int. Cl.: B65G 47/84

(54) **Klammer zum Halten von Behältern**
Clamp for holding containers
Pince de préhension de conteneurs

(30) Priorität: 12.07.2008 DE 102008032923
(43) Veröffentlichungstag der Anmeldung: 13.01.2010
(73) Patentinhaber: Krones AG, 93073 Neutraubling (DE)
(72) Erfinder: Glötzl, Reiner, 93080 Pentling (DE)
(74) Vertreter: Grünecker, Kinkeldey, Stockmair & Schwanhäusser

(56) Entgegenhaltungen:
- DE-U1- 29 915 927
- US-A- 5 893 700

## Beschreibung

Die Erfindung betrifft eine Klammer gemäß Oberbegriff des Patentanspruchs 1.

Solche Klammern werden in großen Stückzahlen in Behälterbehandlungs- oder -transportvorrichtungen eingesetzt, um Behälter wie Flaschen, beispielsweise PET-Flaschen, vorübergehend zu ergreifen und zu positionieren. Ein fester Sitz des Behälters in der Klammer ist eine wichtige Voraussetzung zum störungsfreien Betrieb der Vorrichtungen. Da die Greifweite der Behälter variieren kann und jeder Behälter unabhängig von der vorliegenden Greifweite gleichartig sauber zentriert gehalten werden muss, werden zwischen einer geöffneten Einführstellung und einer geschlossenen Greifstellung gesteuerte Klammern benutzt, in denen zur Kompensation solcher Greifweiten-Variationen elastische Glieder enthalten sind.

In einer aus US 5 893 700 A bekannten Klammer einer gattungsgemäßen Art sind zwischen den Greifarmen baulich von diesen getrennte, auf den Schwenkachsen der Greifarme schwenkbar gelagerte Arme gelagert, die sich mit ihren freien Enden beiderseits des Schließnockens über diesen hinaus erstrecken. Die beiden Arme weisen dem Schließnocken zugewandt verschleißfeste Kunststoffeinsätze auf. In den dem Schließnocken abgewandten Rückseiten der Arme sind in Vertiefungen kissenförmige Federelemente aus Kunststoff festgelegt, die sich zu den freien Enden der Schließhebel erstrecken und vom die Klammer in öffnungsrichtung beaufschlagenden Kraftspeicher vorgespannt werden. Die Arme und die Greifarme bestehen aus biegesteifem Kunststoff. Die Klammerkraft zum Halten eines Behälters wird ausschließlich von den Federelementen erzeugt, die in einem normalen Behältergrößenbereich bei jedem Greifzyklus jeweils bis zu einem Drittel komprimiert werden, bei größeren Behälterdurchmessern sogar noch stärker komprimiert werden. Die Federelemente unterliegen frühzeitiger Ermüdung. Falls ein zu ergreifender Behälter fehlausgerichtet ist und/oder aufgrund äußerer Einflüsse außermittig festsitzt, oder falls ein anderes Hindernis die Schließbewegung eines oder beider Greifarme blockieren sollte, werden die Federelemente unzweckmäßig stark komprimiert.

WO 2006/102983 A betrifft eine Klammer, bei der die mit den Greifarmen einstückigen Schließhebel direkt an dem Schließnocken angreifen. Die elastischen Verformungsbereiche sind in die Schließhebel jeweils zwischen der Achse und dem freien Ende integriert. Der Kraftspeicher besteht aus zwei einander abstoßenden Permanentmagneten an der zu den Greifstrukturen weisenden Achsenseite und beaufschlagt die Greifarme in Öffnungsrichtung der Klammer. Der Schließnocken hat beispielsweise ovalen Querschnitt. In einer Drehposition des Schließnockens sind die Schließhebel unter der Wirkung des Kraftspeichers maximal einander angenähert, während in einer anderen Drehposition die Greifstrukturen zueinander bewegt sind und ein zwischen die Greifstrukturen eingeführter Behälter gehalten wird. Die Drehposition des Schließnockens bestimmt im Zusammenspiel mit der Elastizität des Verformungsbereiches die am Behälter wirksame Schließkraft. Die Elastizität des Verformungsbereiches kompensiert Greifweiten-Variationen. Da die Verformungsbereiche nicht nur die zum Kompensieren von Greifweiten-Variationen erforderlichen Belastungen aufzunehmen haben, sondern sämtliche Belastungen vom Schließnocken bis zu den Greifstrukturen übertragen müssen, kann es zu Ermüdungsbrüchen kommen. Es können nämlich überhöhte Kräfte auf den Verformungsbereich einwirken, z.B. wenn ein zu ergreifender Behälter fehlausgerichtet ist und/oder aufgrund äußerer Einflüsse außermittig festsitzt, oder falls ein anderes Hindernis die Schließbewegung eines oder beider Greifarme blockieren sollte.

DE-299 15 927 U betrifft eine Klammer, bei der in den Schließhebeln der beiden Greifarme gewölbte Blattfedern positioniert sind, die am Schließnocken anliegen. Die Blattfedern sitzen mit einem Spiel in Druckrichtung des Schließnockens in Ausnehmungen der Schließhebel, wobei hinter jeder Blattfeder eine Druckfeder eingesetzt ist. Diese Federanordnung dient zum Kompensieren von Greifweiten-Variationen der Behälter. Der Aufbau ist vielteilig. Ferner liegen mehrere enge und hinterschnittene Hohlräume vor, so dass die Klammer schwierig zu reinigen ist. Da jede Federanordnung nicht nur Verformungen zur Greifweiten-Variations-Kompensation unterliegt, sondern sämtliche Kräfte zwischen dem Schließnocken und dem Greifarm zu übertragen haben, kann es zu Ermüdungsbrüchen kommen bzw. können in Notfällen zu hohe Kräfte auf die Federanordnungen einwirken, bis diese auf Block gehen, wobei zumindest die Druckfedern leicht Schaden erleiden.

Der Erfindung liegt die Aufgabe zugrunde, eine Klammer anzugeben, die baulich einfach und trotz der Möglichkeit, Greifweiten-Variationen der Behälter zu kompensieren, funktionssicher ist.

Die gestellte Aufgabe wird mit den Merkmalen des Patentanspruchs 1 gelöst.

Durch die bauliche Trennung zwischen dem Arm und dem Greifarm mit seinem Schließhebel und dank des begrenzten Verformungszwischenraums zwischen dem Anschlag am Schließhebel und dem elastisch verformbaren Abschnitt wird der Abschnitt nur zur Greifweiten-Variations-Kompensation eingesetzt, während er bei höheren Kräften auf Block kommt und diese höheren Kräfte ohne weitere Verformung des Abschnitts direkt vom Schließhebel auf den Schließnocken oder umgekehrt übertragen werden. Da somit der Abschnitt von der Übertragung zu großer Kräfte nur mittels seiner Elastizität freigestellt ist, ist die durchschnittliche Belastung des Abschnitts selbst bei langer Gebrauchsdauer mit vielen Arbeitszyklen reduziert, so dass ein Ermüdungsbruch nahezu vollständig ausgeschlossen ist, und der Abschnitt durch in Not- oder Fehlersituationen auftretende hohe Kräfte keinen Schaden erleidet. Dies erhöht die Funktionssicherheit der Klammer erheblich. Aus der baulichen Trennung resultiert ferner der Vorteil kostengünstigen Herstellung und Montage der Klammer, und lässt sich die Klammer einfach reinigen.

Bei einer zweckmäßigen Ausführungsform ist der Arm gemeinsam mit dem Greifarm an der Achse schwenkgelagert. In Verbindung mit der formschlüssigen Kopplung bewirkt die gemeinsame Schwenklagerung, dass sich der Arm nahezu als Einheit mit dem Greifarm bewegt, und nur mehr der am Schließnocken angreifende Abschnitt des Armes relativ zum Schließhebel begrenzt bewegbar ist, um die Greifweiten-Variationen der Behälter zu kompensieren.

Baulich einfach weist die formschlüssige Kopplung wenigstens einen am Greifarm bzw. Schließhebel und/oder am Arm angeordneten Anlagebereich auf. Vorzugsweise, sind an jeder Achsenseite nahe der Achse je ein Anlagebereich vorgesehen, in welchem der Arm und der Schließhebel bzw. der Greifarm aneinander anliegen und sich innerhalb des Erstreckungsbereiches zwischen den Anlagebereichen gemeinsam um die Achse bewegen.

Zweckmäßig wird der jeweilige Anlagebereich blockförmig ausgebildet, so dass beiderseits des Blocks große Reinigungsöffnungen begrenzt werden, in denen die Klammer leicht gereinigt werden kann. Diese Reinigungsöffnungen sind ohne Engstellen und Hinterschnitte ausbildbar.

Bei einer bevorzugten Ausführungsform erstreckt sich der elastisch verformbare Abschnitt zwischen dem an der zum Schließnocken weisenden Seite der Achse angeordneten Anlagebereich und einem freien Ende des Armes. Hierbei ergibt sich eine relativ große nutzbare Biegelänge für den Abschnitt, so dass der Verformungswiderstand innerhalb des durch den Verformungszwischenraums gegebenen Hubs relativ konstant bleibt.

Zweckmäßig wird am freien Ende des Armes ein verdickter, am Schließnocken anliegender Stützkörper vorgesehen, um hier hohe Verschleißfestigkeit zu erzielen.

Der Anschlag am Schließhebel des Greifarmes kann ein zum Schließnocken weisend erhabener Fortsatz sein, der in Schwenkrichtung auf den Stützkörper ausgerichtet ist, oder auf eine Zone des Abschnitts nahe beim Stützkörper. Somit wird nach Überwinden des Verformungszwischenraums der Anschlag des Schließhebels direkt am Stützkörper oder nahe beim Stützkörper zur Anlage gebracht, so dass kein parasitärer Hebelarm mehr wirkt, sondern auch hohe Kräfte direkt dort vom Anschlag auf den Schließnocken oder umgekehrt übertragen werden, ohne den Abschnitt weiter zu verformen.

Um Greifweiten-Variationen zu kompensieren, würde es ausreichen, nur einem Greifarm einen Arm zuzuordnen. Um jedoch die ergriffenen Behälter, unabhängig von Variationen der Greifweite, stets an einer exakt vorbestimmten Position zu zentrieren, wird zweckmäßig jedem Greifarm ein Arm mit einem elastisch verformbaren Abschnitt zugeordnet, d.h. die Klammer symmetrisch aufgebaut.

Bei einer zweckmäßigen Ausführungsform ist der Arm ein einstückiger Kunststoff-Formteil, und kann der Greifarm ein einstückiger Metall-Formteil sein. In dem Kunststoff-Formteil kann die materialbedingte Elastizität zur Greifweiten-Variationen-Kompensation genutzt werden, gegebenenfalls unterstützt durch eine entsprechende Konfiguration des Querschnitts des Abschnittes.

Bei einer zweckmäßigen Ausführungsform weist der Arm zwischen den Anlagebereichen, in denen er mit dem Schließhebel formschlüssig gekoppelt ist, ein Lagerauge auf. Auch der Greifarm kann mit einem Lagerauge versehen sein. In beide, gleich großen und koaxial positionierten Lageraugen ist dann die gemeinsame Lagerbuchse eingesetzt.

Bei einer zweckmäßigen Ausführungsform, die kompakte Abmessungen der Klammer ermöglicht, hat das Lagerauge des Arms einen Querschlitz, und ist das Lagerauge des Greifarms im Querschlitz positioniert.

Der Kraftspeicher, der beispielsweise zum Auseinanderspreizen der Greifstrukturen benutzt wird, könnte an den Greifarmen angebracht sein. Bei einer zweckmäßigen Ausführungsform ist jedoch der Arm über das Lagerauge hinaus verlängert und ist an der Verlängerung eine Aufnahme für die oder für eine Komponente des Kraftspeichers vorgesehen. Diese Aufnahme ist vorzugsweise eine topfförmige Aufnahme für einen scheibenförmigen Permanentmagneten.

Um die Öffnungskraft des Kraftspeichers direkt in die Greifarme zu übertragen, ist bei einer zweckmäßigen Ausführungsform der der Greifstruktur zugewandte Anlagebereich zwischen dem Greifarm und der Aufnahme des Arms positioniert.

Bei einer zweckmäßigen Ausführungsform wird der als Verformungsbereich bestimmte Abschnitt des Arms als Biegestab ausgebildet, der in Schwenkrichtung um die Achse gemessen, mit einer Stärke ausgebildet ist, die geringer ist als die Stärke im weiteren Verlauf des Arms.

Eine Ausführungsform des Erfindungsgegenstandes wird anhand der Zeichnungen erläutert. Es zeigen:
- Fig. 1: eine Perspektivansicht einer Klammer zum Halten von Behältern, in geöffneter Stellung, und
- Fig. 2: eine perspektivische Explosionsdarstellung einer Hälfte der Klammer von Fig. 1.

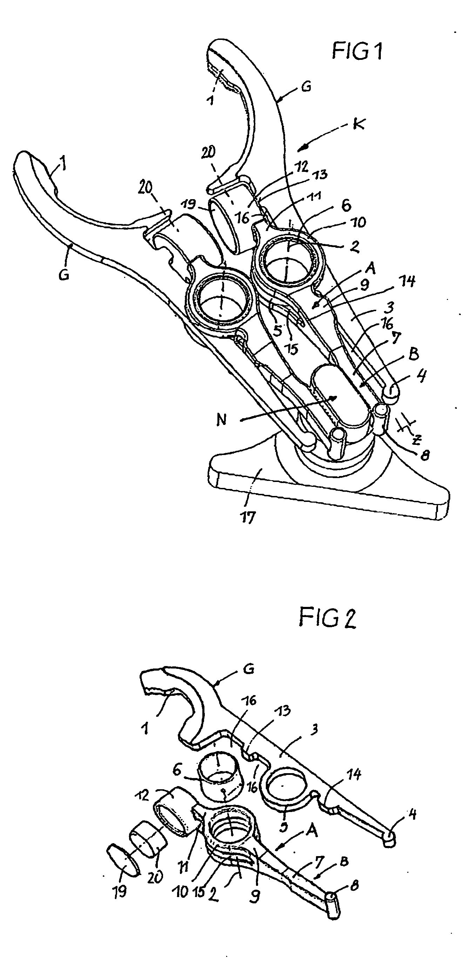

Eine in Fig. 1 gezeigte Klammer K zum vorzugsweise vorübergehenden Festhalten und Positionieren eines nicht gezeigten Behälters, beispielsweise einer PET-Flasche, ist in einer nicht gezeigten Behälterbehandlungs- oder -transportvorrichtung auf einem nicht gezeigten Träger angeordnet. Die Klammer K weist zwei beispielsweise als Metall-Formteile ausgebildete Greifarme G auf, die, in der gezeigten Ausführungsform, um zwei getrennte Achsen 2 gegensinnig schwenkbar angeordnet sind. Bei einer nicht gezeigten Alternative könnte für die beiden Greifarme G auch eine gemeinsame Achse 2 verwendet werden. Jeder Greifarm weist an einem Ende eine innenseitige Greifstruktur 1 zum Festhalten des Behälters auf, und ist über die Achse 2 hinaus zur anderen Achsenseite mit einem Schließhebel 3 verlängert, dessen freies Ende einen Anschlag 4 trägt, der sich im Abstand von einem Schließnocken N befindet. Im Verlauf des Greifarmes G ist ein Lagerauge 5 geformt, in welchem eine Buchse 6 sitzt, die den Greifarm G an der Achse 2 schwenkbar lagert.

Ferner ist zumindest einem Greifarm G der Klammer K, vorzugsweise jedem Greifarm G, innenseitig ein als Kunststoff-Formteil ausgebildeter Arm A zugeordnet, der als elastischen Verformungsbereich B einen biegestabartigen Abschnitt 7 besitzt. Am freien Ende des Abschnitts 7 ist ein am Schließnocken N anliegender Stützkörper 8 vorgesehen, beispielsweise eine stiftförmige Verdickung, die parallel zu den Seitenflächen des Schließnockens N liegt. An den Abschnitt 7 schließt sich in Richtung zur Achse 2 ein verbreiteter Abschnitt 9 des Arms A an, der ein Lagerauge 10 enthält, das ebenfalls mittels der Buchse 6 um die Achse 2 schwenkgelagert ist. Jenseits des Lagerauges 10 besitzt der Arm A eine Verlängerung 11 mit einer Aufnahme 12, die durch einen Deckel 19 verschlossen ist und einen Kraftspeicher 20 enthält, beispielsweise einen Permanentmagneten, der mit einem im anderen Arm A in dessen Aufnahme 12 enthaltenen Permanentmagneten abstoßend zusammenwirkt.

In der in Fig. 1 gezeigten Öffnungsstellung der Klammer K sind die gegebenenfalls am Schließnocken N (oder an nicht gezeigten Anschlägen z.B. des Trägers) anliegenden Abschnitte 7 unter der Öffnungskraft des Kraftspeichers 20 vorgespannt. Zwischen den Stützkörpern 8 und den Anschlägen 4 liegt jeweils ein vorbestimmter Verformungszwischenraum Z vor.

Der baulich vom Greifarm G getrennte, an sich eigenbeweglich schwenkgelagerte Arm A ist mit dem Greifarm G bzw. dem Schließhebel 3 formschlüssig gekoppelt, so dass sich diese beiden Komponenten gemeinsam um die Achse 2 bewegen. In der gezeigten Ausführungsform sind an beiden Achsenseiten Anlagebereiche 13, 14, jeweils nahe den Lageraugen 5, 10 vorgesehen. Der Anlagebereich 13 greift zweckmäßig direkt an der Aufnahme 12 an, um die Kraftwirkung des Kraftspeichers 20 dort direkt in den Greifarm G zu übertragen. Der Arm A ist in Richtung der Achse 2 höher als der Greifarm G. Das Lagerauge 10 des Arms A besitzt einen Querschlitz 15, in welchem das schmalere Lagerauge 5 des Greifarms G eingesetzt ist. Die Buchse 6 erstreckt sich von der Oberseite des Lagerauges 10 bis zu dessen Unterseite.

Die Anlagebereiche 13, 14 werden zweckmäßig durch blockförmige Strukturen gebildet, die am Greifarm G bzw. dem Schließhebel 3 und/oder am Arm A angeordnet sind, und die beiderseits von großzügig bemessenen Reinigungsöffnungen 16 begrenzt werden.

Der Schließnocken N ist mit einer Steuerkulisse 17 verbunden, die durch einen nicht gezeigten Mechanismus so beaufschlagt wird, dass der Schließnocken N aus der gezeigten Stellung in der einen und/oder anderen Drehrichtung verdreht wird. Dabei beaufschlagt der Schließnocken N jeden Stützkörper 8, wodurch jeder Arm A um die Achse 2 verschwenkt wird. Dank der formschlüssigen Kopplung in den Anlagebereichen 13, 14 wird auch der Greifarm G synchron mitverschwenkt, so dass letztendlich der zwischen die Greifstrukturen 1 eingeführte Behälter ergriffen und gehalten wird. Beim Weiterdrehen des Schließnockens N bei ergriffenem Behälter wird der Abschnitt 7 innerhalb des auf eine maximale Greifweiten-Variation abgestimmten Verformungszwischenraums Z elastisch verformt, so dass unabhängig von Greifweiten-Variationen der Behälter jeder Behälter mit im Wesentlichen der gleichen Greifkraft und an derselben Position gehalten wird. Sollte dann der Schließnocken N noch weiter verdreht werden, oder sollten aus anderen Gründen, beispielsweise auf einen oder beide Greifarme G hohe externe Kräfte einwirken, kommt der Anschlag 4 des Schließhebels 3 am Stützkörper 8 oder in dessen Nähe zur Anlage, so dass der einen Biegestab definierende Abschnitt 7 auf Block geht. Die dann wirkenden Kräfte werden direkt vom Anschlag 4 über den Abschnitt 7 auf den Schließnocken N übertragen, oder umgekehrt, ohne den Abschnitt 7 noch weiter zu biegen.

Wird der Schließnocken N dann entweder weitergedreht oder in der Gegenrichtung zurück in die in Fig. 1 gezeigte Stellung gebracht, dann lockert sich zunächst der Griff der Greifstrukturen 1 am Behälter, ehe schließlich aufgrund der Wirkung des Kraftspeichers 20 die Arme A und mit diesen die Greifarme G auseinandergespreizt werden. Zuvor hat sich, falls der Anschlag 4 am Abschnitt 7 oder dem Stützkörper 8 angelegt worden sein sollte, der Anschlag 4 abgehoben, so dass sich der Abschnitt 7 weitgehend entspannt, bis die Klammer K in die Stellung von Fig. 1 kommt. Der Arm A übt nur mehr einen vernachlässigbaren Kontaktdruck auf den Schließnocken N aus, denn es wirkt dann die vom Kraftspeicher generierte Öffnungskraft, die den Stützkörper 8 am Schließnocken N hält.

Fig. 2 verdeutlicht die einzelnen Komponenten, aus der eine Hälfte der Klammer K von Fig. 1 besteht. Der als Kraftspeicher 20 dienende Permanentmagnet wird beispielsweise in der Aufnahme 10 durch Verschweißen des Deckels 19 hygienisch einwandfrei isoliert platziert. Die Buchse 6 kann mit Spannung durch eine entsprechende Dimensionierung in den Lageraugen 5, 10 sitzen, oder durch ein nicht gezeigtes Sicherungselement festgelegt sein. Der Abschnitt 7 des Arms A hat eine im Wesentlichen gleichbleibende Stärke, in Schwenkrichtung gesehen, die geringer ist als die Stärke des Arms A in seinem weiteren Verlauf. Anstelle eines am Schließhebel 3 ausgeformten Anschlags 4 wäre es auch denkbar, am Abschnitt 7 oder am Stützkörper 8 einen Anschlag vorzusehen oder den Stützkörper 8 als Anschlag zu verwenden, der am Schließhebel 3 zur Anlage kommt, sobald der begrenzte Verformungszwischenraum Z (Fig. 1) überwunden worden ist.

## Patentansprüche

1. Klammer (K) zum Halten von Behältern, insbesondere in einer Behälterbehandlungs- oder - transportvorrichtung, mit zwei an einer gemeinsamen oder zwei getrennten Achsen (2) gegensinnig schwenkgelagerten Greifarmen (G) mit einendigen Klammerstrukturen (1), einem funktionell zwischen den Greifarmen (G) wirksamen, gegebenenfalls an der den Klammerstrukturen (1) zugewandten Achsenseite, angeordneten Kraftspeicher (20), als Verlängerungen der Greifarme (G) zur anderen Achsenseite ausgebildete Schließhebel (3), wenigstens einem vom Greifarm (G) und dessen Schließhebel 83) baulich getrennter und zur gemeinsamen Schwenkbewegung mit dem Greifarm (G) und dem Schließhebel (3) formschlüssig koppelbaren Arm (A) und einem zwischen den Schließhebeln (3) zur Beaufschlagung der Greifarme (G) verdrehbar angeordneten Schließnocken (N), wobei zumindest ein Schließhebel (3) vom Schließnocken (N) über den Arm (A) und einen elastischen Verformungsbereich (B) beaufschlagbar ist, **dadurch gekennzeichnet, dass** der Verformungsbereich (B) ein am Schließnocken (N) angreifender Abschnitt (7) des Armes (A) ist, und dass zumindest in weitgehend unverformtem Zustand des Abschnitts (7) zwischen einem Anschlag (4) am Schließhebel (3) und dem Abschnitt (7) ein begrenzter freier Verformungszwischenraum (Z) für den Abschnitt (7) vorgesehen ist.

2. Klammer nach Anspruch 1, **dadurch gekennzeichnet, dass** der Verformungszwischenraum (Z) auf zu erwartende, maximale Greifweiten-Variationen unter den Behältern begrenzt ist.

3. Klammer nach Anspruch 1, **dadurch gekennzeichnet, dass** der Arm (A) gemeinsam mit dem Greifarm (G) an der Achse (2) schwenkgelagert ist.

4. Klammer nach Anspruch 1, **dadurch gekennzeichnet, dass** die formschlüssige Kopplung zwischen dem Arm (A) und dem Greifarm (G) wenigstens einen am Greifarm (G) bzw. am Schließhebel (3) und/oder am Arm (A) angeordneten, gegenseitigen Anlagebereich (13, 14) umfasst, vorzugsweise an jeder Achsenseite und nahe der Achse (2) je einen Anlagebereich (13, 14).

5. Klammer nach Anspruch 4, **dadurch gekennzeichnet, dass** der Anlagebereich (13, 14) blockförmig ausgebildet ist und beiderseits von Reinigungsöffnungen (16) zwischen dem Arm (A) und dem Greifarm (G) bzw. dem Schließhebel (3) begrenzt ist.

6. Klammer nach Anspruch 1, **dadurch gekennzeichnet, dass** sich der Abschnitt (7) zwischen dem an der zum Schließnocken (N) weisenden Achsenseite angeordneten Anlagebereich (14) und einem freien Ende des Armes (A) erstreckt.

7. Klammer nach Anspruch 6, **dadurch gekennzeichnet, dass** am freien, zum Schließnocken (N) weisenden Ende des Arms (A) ein verdickter Stützkörper (8) vorgesehen ist.

8. Klammer nach Anspruch 7, **dadurch gekennzeichnet, dass** der Anschlag (4) ein zum Schließnocken (N) weisend erhabener Fortsatz am freien Ende des Schließhebels (3) ist, der in Schwenkrichtung entweder direkt auf den Stützkörper (8) oder eine Zone des Abschnitts (7) nahe beim Stützkörper (8) ausgerichtet ist.

9. Klammer nach wenigstens einem der Ansprüche 1 bis 8, **dadurch gekennzeichnet, dass** beiden Greifarmen (G) je ein Arm (A) zugeordnet ist.

10. Klammer nach wenigstens einem der vorhergehenden Ansprüche, **dadurch gekennzeichnet, dass** der Arm (A) ein einstückiger Kunststoff-Formteil und der Greifarm (G) ein einstückiger Metall-Formteil sind.

11. Klammer nach Anspruch 1, **dadurch gekennzeichnet, dass** der Arm (A) zwischen den Anlagebereichen (13, 14) ein Lagerauge (10) aufweist, dass der Greifarm (G) zwischen der Greifstruktur (1) und dem Schließhebel (3) ein Lagerauge (5) aufweist, und dass in beide Lageraugen (10, 5) eine gemeinsame Lagerbuchse (6) eingesetzt ist.

12. Klammer nach Anspruch 11, **dadurch gekennzeichnet, dass** das Lagerauge (10) des Arms (A) einen Querschlitz (15) aufweist, und dass das Lagerauge (5) des Greiferarmes (G) im Querschlitz (15) sitzt.

13. Klammer nach wenigstens einem der vorhergehenden Ansprüche, **dadurch gekennzeichnet, dass** der Arm (A) über das Lagerauge (10) hinaus verlängert ist und an der Verlängerung (11) eine Aufnahme (12) für den oder eine Komponente des Kraftspeichers (20) aufweist, vorzugsweise eine topfförmige Aufnahme (12) für einen Permanentmagneten.

14. Klammer nach Anspruch 13, **dadurch gekennzeichnet, dass** der der Greifstruktur (1) zugewandte Anlagebereich (13) zwischen dem Greifarm (G) und der Aufnahme (12) positioniert ist.

15. Klammer nach wenigstens einem der vorhergehenden Ansprüche, **dadurch gekennzeichnet, dass** der Abschnitt (7) als Biegestab mit in Schwenkrichtung um die Achse (2) gemessen gegenüber dem weiteren Verlauf des Armes (A) verringerter und zumindest annähernd konstanter Stärke ausgebildet ist.

## Claims

1. Clamp (K) for holding containers, in particular in a container treatment device or container transport device, comprising two grip arms (G) supported for pivot movements in opposite senses at a common axis or at two separated axes (2), the grip arms (G) having clamping structures (1) at one end, a first accumulator (20) functionally acting between the grip arms (G), optionally arranged at the side of the axes facing to the clamping structures (1), closing levers (3) formed as extensions of the grip arms (G) and extending to the other side of the axes, at least one arm (A) structurally separated from the respective grip arm (G) and the closing lever (3), which arm (A) can be coupled in form-fit fashion for a common pivot movement with the grip arm (G) and the closing lever (3), and a closing cam (N) rotatably arranged between the closing levers (3) for actuating the grip arms (G), wherein at least one closing lever (3) is actuable by the closing cam (N) via the arm (A) and an elastic deformation portion (B), **characterised in that** the deformation portion (B) is a section (7) of the arm (A) which section engages at the closing cam (N), and that at least in substantially non-deformed condition of the section (7) and at a location between a stop for the closing lever (3) and the section (7) a limited free intermediate space (Z) is provided for a deformation of the section (7).

2. Clamp according to claim 1, **characterised in that** the deformation intermediate space (Z) is limited to the expected maximum gripping width variations among containers of different widths.

3. Clamp according to claim 1, **characterised in that** the arm (A) is pivotably supported at the axis (2) commonly with the grip arm (G).

4. Clamp according to claim 1, **characterised in that** the form-fit coupling between the arm (A) and the grip arm (G) comprises at least one abutment region (13, 14) for mutual abutment at the grip arm (G) or at the closing lever (3) and/or at the arm (A), preferably a respective abutment region (13, 14) at each side of the axis and proximate to the axis (2).

5. Clamp according to claim 4, **characterised in that** the abutment region (13, 14) is formed with a block shape and is limited at both sides by cleaning openings (16) located between the arm (A) and the grip arm (G) or the closing lever (3).

6. Clamp according to claim 1, **characterised in that** the section (7) extends between a free end of the arm (A) and the abutment region (14) which is arranged at the side of the axis facing to the closing cam (N).

7. Clamp according to claim 6, **characterised in that** a thickened support body (8) is provided at the free end of the arm (A) which free end is directed towards the closing cam (N).

8. Clamp according to claim 7, **characterised in that** the stop (4) is a projecting boss at the free end of the closing lever (3), the boss facing the closing cam (N), which boss is directed in pivoting direction either directly to the support body (8) or to a zone of the section (7) close to the support body (8).

9. Clamp according to at least one of claims 1 to 8, **characterised in that** a respective arm (A) is functionally associated to each of both grip arms (G).

10. Clamp according to at least one of the preceding claims, **characterised in that** the arm (A) is a one piece plastic material form part, and that the grip arm (G) is a one piece metal form part.

11. Clamp according to claim 1, **characterised in that** the arm (A) comprises a bearing eye (10) between the abutment regions (13, 14), that the grip arm (G) has a bearing eye (5) between the gripping structure (1) and the closing lever (3), and that a common bearing bushing (6) is inserted into both bearing eyes.

12. Clamp according to claim 11, **characterised in that** the bearing eye (10) of the arm (A) has a lateral slot (15), and that the bearing eye (5) of the grip arm (G) is seated in the lateral slot (15).

13. Clamp according to at least one of the preceding claims, **characterised in that** the arm (A) is extended beyond the bearing eye (10) and has a socket (12) at the extension for the force accumulator (20) or a component of the force accumulator (20), preferably a pot-shaped socket (12) for a permanent magnet.

14. Clamp according to claim 13, **characterised in that** the abutment region (13) facing towards the gripping structure (1) is positioned between the grip arm (G) and the socket (12).

15. Clamp according to at least one of the preceding claims, **characterised in that** the section (7) is formed as a bending rod having a thickness in pivoting direction about the axis (2) which has at least substantially constant magnitude and is reduced in relation to the thickness within the further course of the arm (A).

## Revendications

1. Pince (K) pour tenir des récipients, en particulier dans un dispositif de traitement ou de transport de récipients, avec deux bras de préhension (G) montés sur un axe commun ou sur deux axes séparés (2) pour pivoter en sens inverse et pourvus de structures de pince à une extrémité (1), un accumulateur d'énergie (20) actif fonctionnellement entre les bras de préhension (G) et disposé éventuellement sur le côté de l'axe tourné vers les structures de pince (1), un levier de fermeture (3) conçu sous la forme de prolongements des bras de préhension (G) vers l'autre côté de l'axe, au moins un bras (A) séparé, de par sa construction, du bras de préhension (G) et du levier de fermeture (3) de celui-ci et apte à être accouplé par complémentarité de forme, pour un mouvement pivotant commun, au bras de préhension (G) et au levier de fermeture (3), et une came de fermeture (N) disposée en rotation entre les leviers de fermeture (3) pour contraindre les bras de préhension (G), étant précisé qu'au moins un levier de fermeture (3) est apte à être contraint par la came de fermeture (N) par l'intermédiaire du bras (A) et d'une zone de déformation élastique (B), **caractérisée en ce que** la zone de déformation (B) est constituée par une section (7) du bras (A) qui agit sur la came de fermeture (N), et **en ce qu'**au moins dans un état pratiquement non déformé de la section (7) il est prévu, entre une butée (4) du levier de fermeture (3) et la section (7), un espace intermédiaire de déformation (Z) libre et limité pour ladite section (7).

2. Pince selon la revendication 1, **caractérisée en ce que** la zone intermédiaire de déformation (Z) est limitée à des variations de largeur de préhension maximales à prévoir, parmi les récipients.

3. Pince selon la revendication 1, **caractérisée en ce que** le bras (A) est monté pivotant sur l'axe (2) conjointement avec le bras de préhension (G).

4. Pince selon la revendication 1, **caractérisée en ce que** l'accouplement par complémentarité de forme entre le bras (A) et le bras de préhension (G) comprend au moins une zone d'application opposée (13, 14) qui est disposée sur le bras de préhension (G) ou le levier de fermeture (3) et/ou sur le bras (A), de préférence une zone d'application (13, 14) de chaque côté de l'axe et près de l'axe (2).

5. Pince selon la revendication 4, **caractérisée en ce que** la zone d'application (13, 14) a la forme d'un bloc et est limitée, des deux côtés d'ouvertures de nettoyage (16), entre le bras (A) et le bras de préhension (G) ou le levier de fermeture (3).

6. Pince selon la revendication 1, **caractérisée en ce que** la section (7) s'étend entre la zone d'application (14) disposée du côté de l'axe tourné vers la came de fermeture (N), et une extrémité libre du bras (A).

7. Pince selon la revendication 6, **caractérisée en ce qu'**il est prévu à l'extrémité libre du bras (A) tournée vers la came de fermeture (N) un corps d'appui épaissi (8).

8. Pince selon la revendication 7, **caractérisée en ce que** la butée (4) est constituée par un prolongement saillant en direction de la came de fermeture (N), à l'extrémité libre du levier de fermeture (3), lequel prolongement est dirigé, dans le sens de pivotement, soit directement vers le corps d'appui (8), soit vers une zone de la section (7) proche du corps d'appui (8).

9. Pince selon l'une au moins des revendications 1 à 8, **caractérisée en ce qu'**un bras (A) est associé à chacun des deux bras de préhension (G).

10. Pince selon l'une au moins des revendications précédentes, **caractérisée en ce que** le bras (A) est constitué par une pièce en matière plastique moulée d'une seule pièce, et le bras de préhension (G) par une pièce en métal moulée d'une seule pièce.

11. Pince selon la revendication 1, **caractérisée en ce que** le bras (A) présente entre les surfaces d'application (13, 14) un oeillet de montage (10), **en ce que** le bras de préhension (G) présente entre la structure de préhension (1) et le levier de fermeture (3) un oeillet de montage (5), et **en ce qu'**un coussinet commun (6) est placé dans les deux oeillets de montage (10, 5).

12. Pince selon la revendication 11, **caractérisée en ce que** l'oeillet de montage (10) du bras (A) présente une fente transversale (15) et **en ce que** l'oeillet de montage (5) du bras de préhension (G) est calé dans la fente transversale (15).

13. Pince selon l'une au moins des revendications précédentes, **caractérisée en ce que** le bras (A) est prolongé au-delà de l'oeillet de montage (10) et présente, sur le prolongement (11), un logement (12) pour l'accumulateur d'énergie (20) ou pour un composant de celui-ci, de préférence un logement en forme de godet (12) pour un aimant permanent.

14. Pince selon la revendication 13, **caractérisée en ce que** la zone d'application (13) tournée vers la structure de préhension (1) est positionnée entre le bras de préhension (G) et le logement (12).

15. Pince selon l'une au moins des revendications précédentes, **caractérisée en ce que** la section (7) est conçue comme une tige de flexion avec une épaisseur, mesurée dans le sens de pivotement sur l'axe (2), qui est réduite par rapport au reste de l'extension du bras (A) et au moins approximativement constante.
